Europäisches Patentamt

European Patent Office

Office européen des brevets

(11) Numéro de publication : **0 078 738**
**B1**

## FASCICULE DE BREVET EUROPÉEN

(45) Date de publication du fascicule du brevet :
02.01.86

(51) Int. Cl.⁴ : **B 29 C 49/08**, B 29 C 49/66

(21) Numéro de dépôt : **82401967.3**

(22) Date de dépôt : **26.10.82**

(54) Dispositif pour le refroidissement d'une feuille tubulaire de matière plastique et procédé s'y rapportant.

(30) Priorité : **28.10.81 FR 8120207**

(43) Date de publication de la demande :
**11.05.83 Bulletin 83/19**

(45) Mention de la délivrance du brevet :
**02.01.86 Bulletin 86/01**

(84) Etats contractants désignés :
**AT BE CH DE GB IT LI LU NL SE**

(56) Documents cités :
**FR-A- 1 555 235**
**FR-A- 1 578 016**
**US-A- 3 307 219**
**US-A- 3 507 006**
**US-A- 3 577 488**

(73) Titulaire : **EMS Extrusion**
**33 Avenue du Maine**
**F-75015 Paris (FR)**

(72) Inventeur : **Barbarit, André**
**22, Allée Anne de Beaujeu**
**F-75019 Paris (FR)**

(74) Mandataire : **Bouju, André et al**
**38 Avenue de la Grande Armée**
**F-75017 Paris (FR)**

Jouve, 18, rue St-Denis, 75001 Paris, France

### Description

La présente invention concerne un dispositif adapté à une tête d'extrusion, destiné au refroidissement d'une feuille tubulaire de matière plastique formée par extrusion.

L'invention vise également le procédé pour la mise en œuvre de ce dispositif.

On sait que les articles en matière plastique, par exemple en polyéthylène, de forme tubulaire, tels que les sacs de poubelle, sont réalisés à partir d'une feuille tubulaire en matière plastique extrudée en continu d'une tête d'extrusion dont l'ouverture de sortie est constituée par une fente annulaire.

L'expansion en longueur et en diamètre de cette feuille tubulaire est assurée en insufflant de l'air à l'intérieur de cette feuille, à partir de la tête d'extrusion. A l'opposé de cette tête d'extrusion, la feuille tubulaire est tirée par des rouleaux.

La vitesse d'extrusion et le refroidissement de la feuille tubulaire de matière plastique doivent être réglés de façon que la température de cette dernière ne dépasse pas un certain seuil (de l'ordre de 50 °C dans le cas d'une feuille tubulaire en polyéthylène, basse densité), au niveau des rouleaux de tirage.

De ce fait, si l'on veut obtenir une vitesse d'extrusion élevée, il est nécessaire de prévoir un refroidissement efficace de la feuille tubulaire extrudée.

Le dispositif destiné au refroidissement d'une feuille tubulaire de matière plastique, visé par l'invention, comprend sur la tête d'extrusion, des moyens pour insuffler un gaz de refroidissement à l'intérieur de la feuille tubulaire en cours d'extrusion, une enveloppe expansible fixée de façon à être contenue à l'intérieur de la feuille tubulaire formée, des moyens pour insuffler un gaz à l'intérieur de ladite enveloppe, pour permettre l'expansion de celle-ci à l'intérieur de la feuille tubulaire et créer entre cette enveloppe et la feuille tubulaire un espace annulaire et des moyens pour réaliser dans cet espace annulaire une cirulation de gaz de refroidissement.

Un tel dispositif est décrit par exemple dans le brevet français 1 578 016. Dans ce dispositif l'enveloppe expansible est portée par un tube axial fixe. Ce tube gêne l'accès à la feuille extrudée, de sorte que pour tirer celle-ci dès sa sortie de la tête d'extrusion, il faut utiliser des moyens complexes qui doivent être enfilés sur le tube fixe. De plus, ce tube axial fixe ne permet pas de régler la longueur de l'enveloppe expansible et par suite la longueur de la zone de refroidissement créée entre cette enveloppe et la feuille tubulaire de matière plastique en cours d'extrusion.

Le brevet français 1 555 235 décrit un dispositif analogue à celui enseigné par le brevet français précité et présentant en outre un tube monté de façon coulissante suivant l'axe permettant de déplacer l'enveloppe expansible à l'intérieur de la feuille tubulaire extrudée. Cependant, ce tube coulissant ne permet pas non plus de régler la longueur de l'enveloppe expansible ainsi que la longueur de la zone de refroidissement créée entre cette enveloppe et la feuille tubulaire de matière plastique en cours d'extrusion.

Le but de la présente invention est de créer un dispositif qui permette de régler la longueur de l'enveloppe expansible de façon à obtenir entre cette enveloppe et la feuille tubulaire, en cours d'extrusion un espace annulaire dans lequel l'air de refroidissement puisse circuler en assurant des conditions d'échange thermique optimales.

Suivant l'invention, ce dispositif est caractérisé en ce que l'enveloppe expansible est fixée à la tête d'extrusion, en ce que la circulation du gaz de refroidissement est dirigée vers l'extrémité de l'enveloppe opposée à la tête d'extrusion et en ce que l'enveloppe est préformée de façon qu'à l'état expansé, le profi de sa paroi latérale suive celui de la paroi latérale de la feuille tubulaire de matière plastique, de façon à maintenir stable le défilement de la feuille tubulaire et à optimiser l'échange thermique de convection entre la matière plastique et l'air interne de refroidissement.

Le tube coulissant permet de prélever le gaz de refroidissement dans la zone intérieure de la feuille, située à l'opposé de la tête d'extrusion. Lorsque le gaz est insufflé à l'intérieur de l'enveloppe, ce tube coulisse librement dans une direction opposée à la tête d'extrusion, de sorte que l'enveloppe s'expanse à la fois diamétralement et longitudinalement.

Le refroidissement peut ainsi être réalisé efficacement suivant une grande partie de la longueur de la feuille extrudée.

De plus, étant donné qu'au début de l'extrusion, le tube coulissant ne fait pas saillie hors de la tête d'extrusion, la feuille tubulaire extrudée peut être tirée facilement, dès sa sortie de la tête d'extrusion, sans que le tube ne constitue une gêne pour cette opération.

Par ailleurs, grâce à l'invention, l'espace annulaire formé entre l'enveloppe expansée et la feuille extrudée présente une épaisseur sensiblement constante le long de la paroi de cette feuille, ce qui permet d'optimiser les conditions d'échanges thermiques.

Le tube peut être un tube souple engagé dans un alésage axial de la tête d'extrusion, son extrémité opposée à l'enveloppe étant enroulée sur un mandrin rotatif situé sous la tête d'extrusion.

Ce tube peut être remplacé par un tube rigide télescopique engagé dans l'alésage axial précité de la tête d'extrusion.

Dans une réalisation particulièrement performante, le dispositif comprend une membrane expansible disposée autour de la partie de la feuille adjacente à la tête d'extrusion et fixée à une paroi rigide qui entoure cette membrane, des moyens pour insuffler un gaz à l'intérieur du volume formé par cette membrane et ladite paroi rigide et créer ainsi entre la feuille tubulaire et cette membrane un espace annulaire ouvert dans une direction opposée à la tête d'extrusion, des moyens étant prévus pour insuffler de l'air de refroidissement dans cet espace annulaire.

Cet espace annulaire permet ainsi d'obtenir un refroidissement efficace de la surface extérieure de la feuille extrudée, qui en combinaison avec le refroidisement réalisé à l'intérieur de la feuille extrudée, permet d'obtenir des cadences de production extrêmement rapides.

L'invention vise également le procédé pour la mise en œuvre du dispositif précité.

Selon l'invention ce procédé est caractérisé en ce qu'après formation de la feuille tubulaire, on insuffle de l'air dans l'enveloppe expansible disposée à l'intérieur de la feuille tubulaire jusqu'à ce que cette dernière atteigne le diamètre et la longueur souhaités et qu'un espace annulaire de faible épaisseur soit créé entre cette enveloppe et la feuille tubulaire, après quoi on insuffle de l'air de refroidissement dans cet espace annulaire et en ce qu'après formation de la feuille tubulaire, on insuffle également de l'air dans la membrane expansible disposée autour de la feuille tubulaire près de la tête d'extrusion et on insuffle de l'air de refroidissement dans l'espace annulaire créé entre la feuille tubulaire et la membrane expansée.

D'autres particularités et avantages de l'invention apparaîtront encore dans la description ci-après.

Aux dessins annexés, donnés à titre d'exemples non limitatifs :

la figure 1 est une vue en élévation d'ensemble du dispositif conforme à l'invention, en cours de fonctionnement ;

la figure 2 est une vue à plus grande échelle et en coupe longitudinale du dispositif dans sa phase initiale de fonctionnement ;

la figure 3 est une vue analogue à la figure 2, le dispositif étant en fonctionnement normal ;

la figure 4 est une vue en coupe suivant le plan IV-IV de la figure 3.

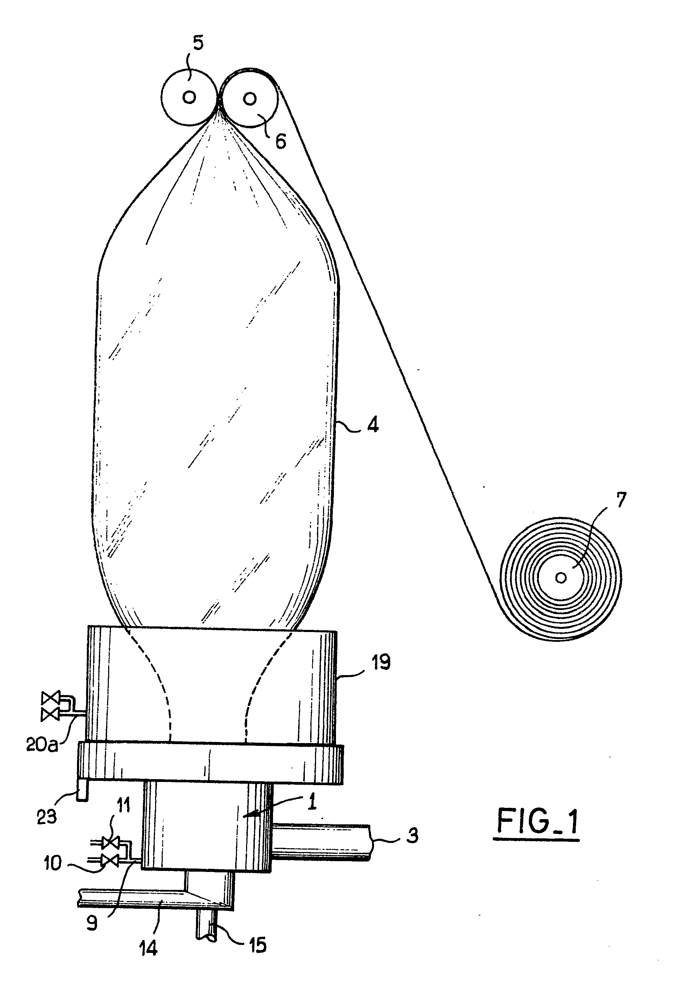

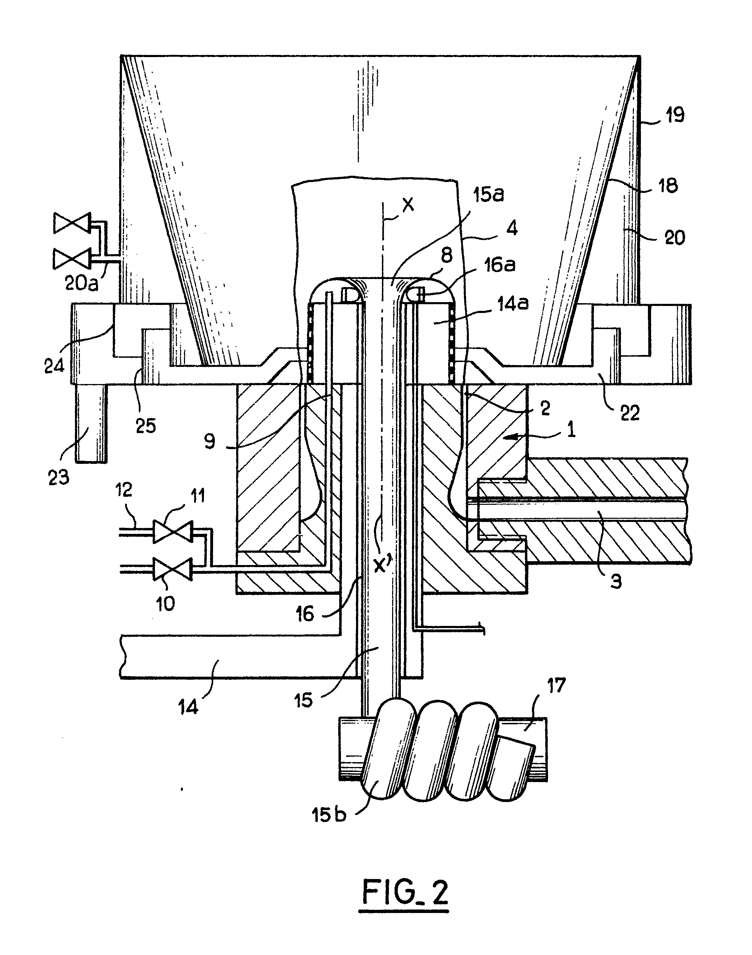

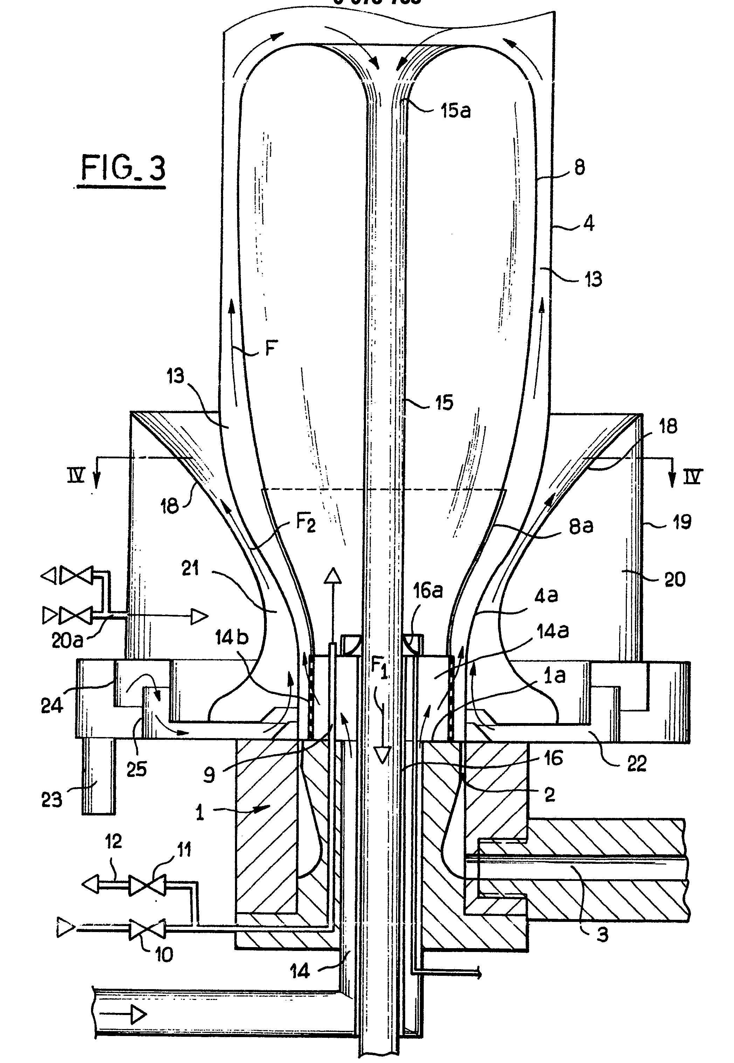

Dans la réalisation représentée sur les figures annexées, la tête d'extrusion 1 comporte une ouverture de sortie 2 constituée par une fente annulaire d'axe X-X' (voir figures 2 et 3). Dans cette fente annulaire, débouche un canal 3 qui communique avec une extrudeuse non représentée. La matière plastique telle que du polyéthylène basse densité, est extrudée par cette fente annulaire 2 en une feuille tubulaire 4 (voir figures 1, 3 et 4).

L'extrémité de la feuille tubulaire de matière plastique 4 est tirée vers le haut d'une façon en elle-même connue par une paire de rouleaux 5, 6 (voir figure 1) puis est enroulée en continu sur un tambour 7.

Le dispositif conforme à l'invention destiné au refroidissement de la feuille tubulaire 4 dans la partie comprise entre la tête d'extrusion 1 et les rouleaux de tirage 5, 6, comprend principalement (voir figures 2 et 3) une enveloppe expansible 8 en élastomère, fixée à la tête d'extrusion 1 et contenue à l'intérieur de la feuille tubulaire 4.

Ce dispositif comprend d'autre part une tubulaire 9 traversant la tête d'extrusion 1, parallèlement à l'axe X-X' et permettant d'insuffler un gaz tel que de l'air à l'intérieur de l'enveloppe 8 pour permettre son expansion.

Cette tubulure 9 est raccordée à une source de gaz sous pression, au moyen de vannes 10, 11 et d'une dérivation 12 permettant de régler la pression du gaz insufflé à l'intérieur de l'enveloppe 8.

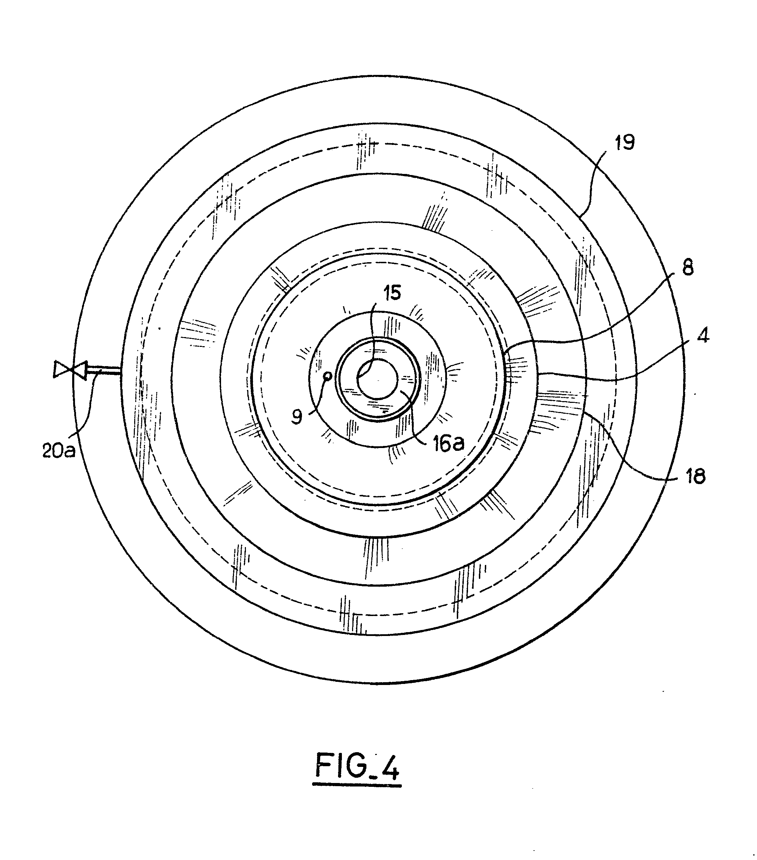

Dans la position expansée (voir figures 3 et 4), il existe entre la feuille extrudée 4 et l'enveloppe 8 un espace annulaire 13 dont l'épaisseur peut être réglée en fonction de la pression du gaz insufflé dans cette enveloppe 8.

La tête d'extrusion 1 est traversée axialement par un conduit 14 d'amenée de gaz de refroidissement tel que de l'air, débouchant dans l'espace annulaire 13. Dans l'exemple représenté (voir figures 2 et 3), le conduit 14 débouche dans une chambre cylindrique 14a disposée autour de l'axe X-X', contre l'extrémité 1a de la tête d'extrusion 1. Le diamètre de cette chambre 14a est légèrement inférieur à celui de la fente annulaire 2 de sortie de la tête d'extrusion 1. De plus, la paroi latérale de cette chambre 14a comporte des ouvertures 14b pour le passage du gaz de refroidissement.

L'enveloppe expansible 8 est reliée à un tube 15 monté de façon coulissante suivant l'axe X-X' de la tête d'extrusion 1. L'extrémité 15a de ce tube 15, opposée à la tête d'extrusion 1, débouche dans le volume intérieur de la feuille extrudée 4 et assure le retour de l'air de refroidissement provenant de la conduite 14 et circulant dans l'espace annulaire 13, le long de la paroi latérale de la feuille extrudée 4.

Ce tube 15 peut coulisser vers l'extérieur de la tête d'extrusion 1, sous l'effet de l'expansion en longueur de l'enveloppe 8, réalisée lors de l'insufflation du gaz par la tubulure 9. Ce tube 15 est à cet effet engagé dans un alésage axial 16 ménagé dans la tête d'extrusion 1.

Dans la réalisation représentée, le tube 15 est en une matière plastique souple identique à celle de l'enveloppe 8 et réalisée d'une seule pièce avec cette dernière. L'extrémité 15b de ce tube 15, opposée à l'enveloppe 8 est enroulée (voir figure 2) sur un mandrin rotatif 17, situé sous la tête d'extrusion 1.

La paroi du tube 15 est avantageusement munie de renforts annulaires (non représentés) pour éviter son écrasement sous l'effet de la pression du gaz qui est introduit à l'intérieur de l'enveloppe 8.

Ce tube 15 peut être remplacé par un tube télescopique et rigide.

L'étanchéité entre le tube 15 et l'alésage 16 est réalisée au moyen d'un joint annulaire 16a disposé à la sortie de cet alésage 16.

Dans la réalisation représentée (voir figure 3), l'enveloppe 8 est préformée de façon qu'à l'état expansé, le profil de sa paroi latérale suive celui de la paroi latérale de la feuille tubulaire de matière plastique 4, notamment dans la partie rétrécie 4a de cette dernière, adjacente à la sortie de la tête d'extrusion 1.

Ce préformage peut être réalisé en renforçant l'enveloppe 8 par une ou plusieurs couches d'élastomère, comme indiqué en 8a sur la figure 3.

On voit d'autre part, sur les figures 2 à 4, que le dispositif conforme à l'invention, comprend en outre une membrane expansible 18 de même nature que l'enveloppe 8, disposée autour de la partie de la feuille 4 qui est adjacente à la tête d'extrusion 1. Cette membrane 18 est fixée à une paroi verticale rigide 19 qui l'entoure en créant ainsi à l'intérieur de la membrane 18, une chambre annulaire expansible 20. Dans cette chambre 20, débouche une tubulure 20a d'introduction d'air ou autre gaz sous pression.

A l'état expansé, comme indiqué sur la figure 3, on crée entre cette membrane 18 et la feuille extrudée 4 un espace annulaire 21 ouvert vers le haut, c'est-à-dire dans une direction opposée à la tête d'extrusion 1. Comme l'enveloppe 8, cette membrane 18 est préformée de façon que son profil suive le plus près possible celui de la partie rétrécie 4a de la feuille extrudée 4.

Dans l'espace annulaire 21 débouche un conduit 22 d'amenée de gaz de refroidissement, tel que de l'air, qui est constitué par un compartiment annulaire disposé autour de l'axe X-X' du dispositif. Le gaz de refroidissement est introduit dans ce conduit 22 par l'intermédiaire d'un tuyau extérieur 23 et d'une série de chicanes 24, 25.

On va maintenant décrire le procédé pour la mise en œuvre du dispositif conforme à l'invention, et en même temps, le fonctionnement de ce dernier.

Lorsque le dispositif est inactif (voir figure 2), le tube 15 est complètement rétracté dans l'alésage 16, son extrémité 15b est enroulée sur le mandrin rotatif 17 et son extrémité évasée 15a raccordée à l'enveloppe 8 repose sur le joint annulaire 16a disposé à l'entrée de l'alésage 16. L'enveloppe 8 proprement dite forme autour de l'extrémité 15a du tube 15 un demi-tore dont le diamètre extérieur correspond à celui de la chambre perforée 14a.

Dans la position représentée sur la figure 2, la feuille de matière plastique 4 est en début d'extrusion. Lorsque cette feuille 4 est suffisamment extrudée, pour pouvoir être tirée par les rouleaux 5, 6 (voir figure 1) on insuffle de l'air par la tubulure 9. L'enveloppe 8 s'expanse en diamètre et en longueur, du fait que le tube 15 coulisse librement vers l'extérieur de l'alésage 16, en se déroulant du mandrin 17.

L'enveloppe 8 prend la position représentée sur la figure 3. Un espace annulaire 13 est créé entre cette enveloppe 8 et la feuille extrudée 4. L'épaisseur de cet espace 13 est réglée en ajustant la pression de l'air au moyen des vannes 10 et 11.

On insuffle alors de l'air de refroidissement dans l'espace annulaire 13 par la conduite 14 et les ouvertures 14b de la chambre 14a. On réalise ainsi une circulation d'air le long de la paroi latérale de la feuille extrudée 4, (voir flèche F figure 3). L'air est évacué à l'extérieur par le tube 15 (voir flèche $F_1$).

Cette circulation d'air permet de refroidir très efficacement la feuille extrudée 4, de sorte qu'il est possible d'augmenter la vitesse d'extrusion par rapport à la vitesse permise par les dispositifs connus.

Pour accroître encore davantage l'efficacité du refroidissement, on insuffle de l'air par la tubulure 20a, afin d'expanser la membrane annulaire 18 et créer entre celle-ci et la partie inférieure de la feuille extrudée 4, un espace annulaire 21 dans lequel on réalise une circulation d'air de refroidis-sement (voir flèche $F_2$ — figure 3).

Le refroidissement de la feuille 4 de matière plastique est ainsi renforcé dans la zone proche de la sortie de la tête d'extrusion 1, c'est-à-dire dans celle où la température de la feuille est la plus élevée.

Par ailleurs, la circulation d'air réalisée dans les espaces annulaires 13 et 21, situés de part et d'autre de la feuille 4, permet de guider par des matelas d'air la feuille dans la zone de raccordement entre la partie inférieure rétrécie et la partie supérieure cylindrique de cette feuille.

On donne ci-après, à titre d'exemple non limitatif, les caractéristiques d'un dispositif conforme à l'invention destiné à la fabrication en continu d'une feuille tubulaire en polyéthylène basse densité, d'épaisseur égale à 220 microns et de largeur à plat égale à 550 mm, soit un diamètre de 350 mm.

Il a été utilisé à cet effet une enveloppe expansible 8 composée de 4 couches superposées de polyéthylène réticulé présentant chacune une épaisseur de 150 microns.

Le tube 15 présentait un diamètre de 68 mm et était renforcé extérieurement par des anneaux rigides.

A l'état expansé, la longueur de l'enveloppe 8 était égale à 3 m.

La pression d'air à l'intérieur de l'enveloppe 8 était comprise entre 50 et 250 mbar, ce qui correspond à un diamètre de l'enveloppe compris entre 200 et 350 mm respectivement.

La pression normale à l'intérieur de l'enveloppe 8 était de 150 mbar. Dans ces conditions, l'enveloppe présente un diamètre égal à 280 mm, ce qui correspond pour l'espace annulaire 13, à une épaisseur égale à 35 mm.

L'air de refroidissement a été soufflé dans cet espace annulaire 13 avec un débit de 4 m³/minute et une surpression très faible (de l'ordre du mbar).

Le refroidissement extérieur a été effectué avec un débit d'air de 18 m³/heure.

Pour une vitesse d'extrusion de la feuille tubulaire 4 égale à 10 m/mn, on a obtenu les résultats suivants :

température de la feuille 4, au niveau des rouleaux 5, 6 de tirage : 40 °C

hauteur de cristallisation, au-dessus de la tête d'extrusion : inférieure à 300 mm.

A titre de comparaison, on obtient dans les mêmes conditions, mais sans utiliser le dispositif

conforme à l'invention pour refroidir l'intérieur de la feuille extrudée 4, les résultats suivants :

température de la feuille 4, au niveau des rouleaux de tirage : 50 °C

hauteur de cristallisation : 600 mm

Ces deux valeurs correspondent aux valeurs maximales admissibles pour une vitesse d'extrusion de 10 m/mn.

Grâce au refroidissement efficace et peu coûteux en énergie obtenu selon l'invention, il est possible d'augmenter d'au moins 20 % la vitesse d'extrusion de la feuille tubulaire 4, sans dépasser les valeurs maximales admises pour la température de la feuille et la hauteur de cristallisation.

Bien entendu, l'invention n'est pas limitée à l'exemple que l'on vient de décrire et on peut apporter à celui-ci, par exemple, les modifications suivantes.

Dans certains cas, le refroidissement extérieur n'est pas indispensable.

Par ailleurs, l'insufflation d'air ou autre gaz de refroidissement, peut être réalisée par des moyens différents de ceux décrits.

Les débits et pressions d'air dans l'enveloppe 8 et dans la membrane 18 peuvent être réglés d'une manière automatique en fonction de divers paramètres prédéterminés, telles que la vitesse d'extrusion, les variations des caractéristiques de la feuille de matière plastique 4, la température ambiante etc...

Par ailleurs, l'enveloppe 8 et la membrane 18 peuvent être préformées pour créer un espace annulaire de refroidissement d'épaisseur variable le long de la paroi de la feuille, en fonction de l'effet de refroidissement désiré.

De plus, l'invention peut s'appliquer à la réalisation de feuilles tubulaires en matière plastique autre que le polyéthylène basse densité.

**Revendications**

1. Dispositif adapté à une tête d'extrusion (1), destiné au refroidissement d'une feuille tubulaire (4) de matière plastique formée par extrusion, la tête d'extrusion comprenant des moyens pour insuffler un gaz de refroidissement à l'intérieur de la feuille tubulaire en cours d'extrusion, une enveloppe expansible (8) fixée de façon à être contenue à l'intérieur de la feuille tubulaire formée, des moyens (9) pour insuffler un gaz à l'intérieur de cette enveloppe (8) pour permettre l'expansion de celle-ci à l'intérieur de la feuille tubulaire et créer entre cette enveloppe et la feuille tubulaire un espace annulaire (13) et des moyens (14) pour réaliser dans cet espace annulaire (13) une circulation de gaz de refroidissement, l'enveloppe expansible (8) étant reliée à un tube (15) monté de façon coulissante suivant l'axe de la tête d'extrusion (1), ce tube débouchant à l'intérieur de la feuille tubulaire (4) dans une direction opposée à la tête d'extrusion, caractérisé en ce que l'enveloppe expansible (8) est fixée à la tête d'extrusion, en ce que la circulation du gaz de refroidissement est dirigée vers l'extrémité de l'enveloppe opposée à la tête d'extrusion et en ce que l'enveloppe (8) est préformée de façon qu'à l'état expansé, le profil de sa paroi latérale suive celui de la paroi latérale de la feuille tubulaire (4) de matière plastique, de façon à maintenir stable le défilement de la feuille tubulaire et à optimiser l'échange thermique de convection entre la matière plastique et l'air interne de refroidissement.

2. Dispositif conforme à la revendication 1, caractérisé en ce qu'il comprend des moyens pour permettre au tube axial (15) de l'enveloppe (8) de coulisser vers l'extérieur de la tête d'extrusion (1), sous l'effet de l'expansion en longueur de ladite enveloppe.

3. Dispositif conforme à la revendication 2, caractérisé en ce que le tube axial (15) est un tube souple engagé dans un alésage axial (16) de la tête d'extrusion (1).

4. Dispositif conforme à la revendication 2, caractérisé en ce que le tube axial est un tube rigide télescopique, engagé dans un alésage axial de la tête d'extrusion (1).

5. Dispositif conforme à l'une quelconque des revendications 3 ou 4, caractérisé en ce que des moyens (16a) sont prévus pour réaliser l'étanchéité entre le tube (15) et l'alésage axial (16).

6. Dispositif conforme à l'une quelconque des revendications 1 à 5, caractérisé en ce que les moyens pour insuffler le gaz de refroidissement à l'intérieur de la feuille tubulaire comprennent une tubulure (14) d'amenée de gaz débouchant dans une chambre cylindrique (14a) disposée autour de l'axe (X-X') de la sortie de la tête d'extrusion (1), le diamètre de cette chambre étant inférieur au diamètre de l'orifice annulaire (2) de sortie de la tête d'extrusion, et la paroi latérale de cette chambre comportant des ouvertures (14b) pour le passage du gaz de refroidissement.

7. Dispositif conforme à l'une quelconque des revendications 1 à 6, caractérisé en ce qu'il comprend une membrane expansible (18) disposée autour de la partie de feuille (4) adjacente à la tête d'extrusion (1) et fixée à une paroi rigide (19) qui entoure cette membrane, des moyens (20a) pour insuffler un gaz à l'intérieur du volume formé par cette membrane (18) et cette paroi rigide (19) et créer ainsi entre la feuille tubulaire et cette membrane un espace annulaire (21) ouvert dans une direction opposée à la tête d'extrusion (1) et des moyens (22) pour insuffler de l'air de refroidissement dans cet espace annulaire (21).

8. Procédé pour la mise en œuvre du dispositif conforme à la revendication 7, caractérisé en ce qu'après formation de la feuille tubulaire (4) on insuffle de l'air dans l'enveloppe expansible (8) disposée à l'intérieur de la feuille tubulaire, jusqu'à ce que cette dernière atteigne le diamètre et la longueur souhaités, et qu'un espace annulaire (13) de faible épaisseur soit créé entre cette enveloppe (8) et la feuille tubulaire (4), après quoi on insuffle de l'air de refroidissement dans cet espace annulaire et en ce qu'après formation de la feuille tubulaire (4), on insuffle également de l'air dans la membrane expansible (18) disposée autour de la feuille tubulaire (4) près de la tête d'extrusion (1) et on insuffle de l'air de refroidissement dans l'espace annulaire (21) créé entre la feuille tubulaire (4) et la membrane expansée (18).

## Claims

1. A device fitted to an extrusion head (1), intended for cooling a tubular sheet (4) of plastic material formed by extrusion, the extrusion head comprising means for blowing a cooling gas inside the tubular sheet during extrusion, an expansible envelope (8) so secured as to be contained inside the tubular sheet formed, means (9) for blowing a gas inside said envelope (8) to allow its expansion inside the tubular sheet and create an annular space (13) between said envelope and the tubular sheet, and means (14) for producing a flow of cooling gas in said annular space (13), the expansible envelope (8) being connected to a tube (15) mounted to slide along the axis of the extrusion head (1), said tube leading to the interior of the tubular sheet (4) in the opposite direction to the extrusion head, characterised in that the expansible envelope (8) is secured to the extrusion head, in that the flow of cooling gas is directed towards the end of the envelope remote from the extrusion head and in that the envelope (8) is pre-formed so that in the expanded state the profile of its side wall follows that of the side wall of the tubular sheet (4) of plastic material so as to keep the movement of the tubular sheet stable and optimize the convection heat exchange between the plastic material and the internal cooling air.

2. A device according to claim 1, characterised in that it comprises means for allowing the axial tube (15) of the envelope (8) to slide towards the exterior of the extrusion head (1) in response to the lengthwise expansion of said envelope.

3. A device according to claim 2, characterised in that the axial tube (15) is a flexible tube engaged in an axial bore (16) of the extrusion head (1).

4. A device according to claim 2, characterised in that the axial tube is a telescopic rigid tube engaged in an axial bore of the extrusion head (1).

5. A device according to claim 3 or 4, characterised in that means (16a) are provided to ensure sealing-tightness between the tube (15) and the axial bore (16).

6. A device according to any one of claims 1 to 5, characterised in that the means for blowing the cooling gas inside the tubular sheet comprise a gas supply spigot (14) leading into a cylindrical chamber (14a) disposed around the axis (X-X) of the outlet of the extrusion head (1), the diameter of said chamber being less than the diameter of the annular outlet orifice (2) of the extrusion head, and the side wall of said chamber being formed with apertures (14b) for the passage of the cooling gas.

7. A device according to any one of claims 1 to 6, characterised in that it comprises an expansible diaphragm (18) disposed around the part of the sheet (4) adjacent the extrusion head (1) and secured to a rigid wall (19) surrounding said diaphragm, means (20a) for blowing a gas inside the volume formed by said diaphragm (18) and said rigid wall (19) and thus creating between the tubular sheet and said diaphragm an annular space (21) which is open in an opposite direction to the extrusion head (1) and means (22) for blowing the cooling air into said anular space (21).

8. A method of using the device according to claim 7, characterised in that after formation of the tubular sheet (4) air is blown into the expansible envelope (8) disposed inside the tubular sheet until the latter reaches the required diameter and length, and in that a thin annular space (13) is created between said envelope (8) and the tubular sheet (4), whereupon cooling air is blown into said annular space and in that after formation of the tubular sheet (4) air is also blown into the expansible diaphragm (18) disposed around the tubular sheet (4) near the extrusion head (1) and cooling air is blown into the annular space (21) created between the tubular sheet and the expanded diaphragm (18).

## Patentansprüche

1. Vorrichtung, die an einen Strangpreßkopf (1) angepaßt und zur Kühlung einer durch Strangpressen gebildeten rohrförmigen Folie (4) bestimmt ist, wobei der Strangpreßkopf Mittel umfaßt, um ein Kühlgas in den Innenraum der rohrförmigen Folie hineinzublasen, während das Strangpressen stattfindet, eine dehnbare Hülle (8) umfaßt, welche derart befestigt ist, daß sie im Innenraum der gebildeten rohrförmigen Folie enthalten ist, Mittel (9) zum Einblasen eines Gases in den Innenraum dieser Hülle (8) enthält, um die Dehnung derselben im Inneren der rohrförmigen Folie zu gestatten und zwischen dieser Hülle und der rohrförmigen Folie einen Ringraum (13) zu erzeugen, und Mittel (14) umfaßt, um in diesem Ringraum (13) eine Kühlgasströmung herzustellen, wobei die dehnbare Hülle (8) an ein Rohr (15) angeschlossen ist, welches längs der Achse des Strangpreßkopfes (1) gleitverschiebbar angebracht ist, wobei dieses Rohr im Innenraum der rohrförmigen Folie (4) in eine Richtung einmündet, die dem Strangpreßkopf entgegengesetzt ist, dadurch gekennzeichnet, daß die dehnbare Hülle (8) an dem Strangpreßkopf befestigt ist, daß die Kühlgasströmung gegen das Ende der Hülle gerichtet ist, welches dem Strangpreßkopf gegenüberliegt, und daß die Hülle (8) derart vorgeformt ist, daß im ausgedehnten Zustand das Profil ihrer Seitenwand dem der Seitenwand der rohrförmigen Folie (4) aus Plastikmaterial folgt, so daß der Ablauf der rohrförmigen Folie stabil gehalten wird und der Konvektions-Wärmeaustausch zwischen dem Plastikmaterial und der inneren Kühlluft optimiert wird.

2. Vorrichtung nach Anspruch 1, dadurch gekennzeichnet, daß sie Mittel umfaßt, um es dem axialen Rohr (15) der Hülle (8) zu gestatten, zur Außenseite des Strangpreßkopfes (1) hin unter der Wirkung der Längenausdehnung der genannten Hülle zu gleiten.

3. Vorrichtung nach Anspruch 2, dadurch gekennzeichnet, daß das axiale Rohr (15) ein flexibles Rohr ist, welches in eine axiale Bohrung (16) des Strangpreßkopfes (1) eingesetzt ist.

4. Vorrichtung nach Anspruch 2, dadurch gekennzeichnet, daß das axiale Rohr ein starres Teleskoprohr ist, welches in eine axiale Bohrung des Strangpreßkopfes (1) eingesetzt ist.

5. Vorrichtung nach einem der Ansprüche 3 und 4, dadurch gekennzeichnet, daß Mittel (16a) vorgesehen sind, um die Dichtheit zwischen dem Rohr (15) und der axialen Bohrung (16) herzustellen.

6. Vorrichtung nach einem der Ansprüche 1 bis 5, dadurch gekennzeichnet, daß sie Mittel zum Einblasen des Kühlgases in den Innenraum der rohrförmigen Folie einen Gaszufuhr-Rohrstutzen (14) umfaßt, welcher in eine zylindrische Kammer (14a) einmündet, die um die Achse (X-X') des Auslasses des Strangpreßkopfes (1) herum angeordnet ist, wobei der Durchmesser dieser Kammer kleiner ist als der Durchmesser der Ringöffnung (2), die den Auslaß des Strangpreßkopfes bildet, und wobei die Seitenwand dieser Kammer Öffnungen (14b) für den Durchgang des Kühlgases umfaßt.

7. Vorrichtung nach einem der Ansprüche 1 bis 6, dadurch gekennzeichnet, daß sie eine dehnbare Membran (18) aufweist, welche um denjenigen Teil der Folie (4) herum angeordnet ist, der an den Strangpreßkopf (1) angrenzt und an einer starren Wand (19) befestigt ist, welche diese Membran umgibt, Mittel (20a) umfaßt, um ein Gas in den Innenraum des Volumens einzublasen, das durch diese Membran (18) und die starre Wand (19) gebildet ist, und auf diese Weise zwischen der rohrförmigen Folie und dieser Membran einen Ringraum (21) zu bilden, welcher in einer Richtung offen ist, die dem Strangpreßkopf (1) gegenüberliegt, sowie Mittel (22) umfaßt, um Kühlluft in diesen Ringraum (21) einzublasen.

8. Verfahren zur Anwendung der Vorrichtung nach Anspruch 7, dadurch gekennzeichnet, daß nach Bildung der rohrförmigen Folie (4) Luft in die dehnbare Hülle (8) eingeblasen wird, welche im Inneren der rohrförmigen Folie angeordnet ist, bis letztere den gewünschten Durchmesser und die gewünschte Länge erreicht hat, und daß ein Ringraum (13) von geringer Dicke zwischen dieser Hülle (8) und der rohrförmigen Folie (4) gebildet wird, woraufhin Kühlluft in diesen Ringraum eingeblasen wird, und daß nach Bildung der rohrförmigen Folie (4) ferner Luft in die dehnbare Membran (18) eingeblasen wird, welche um die rohrförmige Folie (4) in der Nähe des Strangpreßkopfes (1) angeordnet ist, und Kühlluft in den Ringraum (21) eingeblasen wird, welcher zwischen der rohrförmigen Folie (4) und der gedehnten Membran (8) gebildet ist.

FIG_1

**FIG. 2**

FIG. 3

0 078 738

FIG.4